# FASCICULE DE BREVET EUROPEEN

(11) **EP 2 588 420 B1**
(45) Date de publication et mention de la délivrance du brevet: **15.07.2020**
(21) Numéro de dépôt: 11738017.0
(22) Date de dépôt: 24.06.2011
(51) Int. Cl.: C02F 5/10, C02F 5/08, C11D 3/34

(54) **DÉTARTRAGE D'OXALATES AVEC COMPOSITIONS ACIDES**
ENTKALKUNG VON OXALATEN MIT SÄUREZUSAMMENSETZUNGEN
DESCALING OF OXALATES WITH ACID COMPOSITIONS

(30) Priorité: 29.06.2010 US 359483 P; 29.06.2010 FR 1055183
(43) Date de publication de la demande: 08.05.2013
(73) Titulaire: Arkema France, 92700 Colombes (FR)
(72) Inventeur: LAFFITTE, Jean-Alex, F-64000 Pau (FR); SRINIVAS, Vijay R., Exton, Pennsylvania 19341 (US)
(86) Numéro de dépôt international: PCT/FR2011/051461
(87) Numéro de publication internationale: WO 2012/001276

(56) Documents cités:
- WO-A2-2009/068810
- FR-A1- 2 774 371

## Description

La présente invention concerne le domaine du nettoyage en général, et en particulier celui du nettoyage industriel et du nettoyage domestique. Plus spécifiquement l'invention vise l'élimination du tartre, principalement du tartre oxalaté, c'est-à-dire l'élimination de résidus comprenant des sels de l'acide oxalique, et principalement des sels minéraux de l'acide oxalique, tels que les oxalates de métaux alcalins et alcalino-terreux, typiquement les oxalates de calcium, de sodium, de potassium et autres.

Les sels de l'acide oxalique, en particulier les sels alcalino-terreux et notamment l'oxalate de calcium, sont connus pour être des solides peu solubles dans l'eau, et dans la plupart des compositions détergentes connues. Il est nécessaire d'utiliser des acides, le plus souvent des acides minéraux forts et à des concentrations relativement élevées, pour parvenir à solubiliser et ainsi éliminer ces sels qui sont notamment responsables de la formation de tartre dans de très nombreux domaines.

Cependant les acides utilisés aujourd'hui se montrent peu efficaces, ou pas suffisamment efficaces, ou bien encore peu respectueux de l'environnement. Ainsi, l'acide chlorhydrique, qui présente une efficacité pourtant satisfaisante, conduit souvent à une oxydation prématurée des aciers inoxydables, et surtout une corrosion par piqûres, ce qui ne peut être accepté dans l'industrie agro-alimentaire.

L'acide sulfamique et l'acide phosphorique, qui ne contiennent pas d'ions chlorure, sont agréés pour le traitement des installations en contact avec les denrées alimentaires. L'acide sulfurique est évité car il conduit à la formation de sulfate de calcium très peu soluble.

L'acide méthanesulfonique (désigné aussi par l'abréviation AMS) est préconisé pour l'élimination des tartres carbonatés et oxalatés, et son pouvoir détartrant est généralement supérieur à celui des acides couramment utilisés dans ces applications.

Les oxalates sont présents dans de très nombreux domaines, en particulier dans tous les domaines où sont présents des micro-organismes vivants, et notamment dans l'industrie agro-alimentaire, dans la préparation, le stockage et le transport des produits mettant en œuvre, ou susceptibles de subir, une fermentation ou des dégradations dues à la fermentation desdits micro-organismes.

Ainsi, les tartres oxalatés sont présents dans les salissures habituellement rencontrées dans les industries laitière, fromagère, dans les industries où sont préparées des boissons fermentées notamment les industries brassicoles, dans les domaines du stockage, du transport, et de la transformation des primeurs, légumes, fruits, viandes, poissons, et autres.

Les oxalates sont également responsables d'entartrage dans les industries de la préparation de la pâte à papier, de la fabrication de sucre à partir de betterave sucrière, du stockage, de la transformation et le traitement des fèves de cacao, du thé, et autres.

Les tartres oxalatés sont également la cause des salissures présentes dans les sanitaires (cuisines, salles de bain, douches et toilettes) domestiques et des collectivités.

Les oxalates conduisent ainsi, par accumulation, à la formation de résidus solides difficilement éliminables, provoquant un phénomène d'entartrage, pouvant notamment boucher partiellement ou totalement les canalisations, et/ou former une couche de protection pour le développement des bactéries qui ne pourront par conséquent ne pas être éliminées, même lors du lavage par des agents désinfectants ou biocides.

Ce phénomène d'entartrage représente ainsi de véritables problèmes en termes de rendements de production, d'hygiène et de santé.

Il est donc important et nécessaire de disposer de compositions de nettoyage des tartres oxalatés toujours plus efficaces, plus respectueuses de l'environnement, et d'action rapide, nécessitant des volumes de compositions nettoyantes moins importants.

Les inventeurs ont maintenant découvert que l'efficacité des acides minéraux ou organiques, en particulier des acides minéraux vis-à-vis de l'élimination des tartres oxalatés, peut être fortement augmentée lorsqu'ils sont utilisés en association avec au moins un acide alcane-sulfonique, ceci permettant d'atteindre, en totalité ou en partie, les objectifs précités.

Ainsi, il a été trouvé que l'association d'au moins un acide alcane-sulfonique avec au moins un acide minéral conduit à une efficacité de dissolution des oxalates organiques ou minéraux, et en particulier des oxalates minéraux, tel que l'oxalate de calcium, beaucoup plus importante que lorsque lesdits acides minéraux sont utilisés seuls.

Il est décrit une composition de détartrage des oxalates comprenant, ou consistant en, un mélange d'au moins un acide alcane-sulfonique avec au moins un autre acide minéral. L'invention a pour objet un procédé de détartrage, de nettoyage ou de dissolution de tout type de tartre comprenant au moins un sel minéral ou organique de l'acide oxalique, et en particulier au moins un sel de métal alcalino-terreux de l'acide oxalique, plus particulièrement au moins un oxalate de calcium, sous forme de résidus, écailles, dépôts, secs ou encore humides, ledit procédé comprenant au moins une étape de mise en contact d'une quantité efficace d'au moins une composition d'acides, sous forme de formulation aqueuse, organique ou hydro-organique, sous forme de solution, de gel ou de gel moussant, avec ledit sel minéral ou organique d'acide oxalique à éliminer, par contact, immersion, aspersion, pulvérisation, application d'une couche plus ou moins épaisse, ladite étape de mise en contact étant éventuellement suivie d'une ou plusieurs étapes de rinçage et/ou de séchage, ladite composition d'acides comprenant :
- entre 40% et 85% en poids d'acide méthane-sulfonique et entre 60% et 15% en poids d'acide phosphorique, par exemple environ 75% en poids d'acide méthane-sulfonique et environ 25% en poids d'acide phosphorique, ou encore environ 50% en poids d'acide méthane-sulfonique et environ 50% en poids d'acide phosphorique, ou bien
- entre 5% et 30% en poids d'acide méthane-sulfonique et entre 95% et 70% en poids d'acide nitrique, de préférence environ 10% en poids d'acide méthane-sulfonique et environ 90% en poids d'acide nitrique.

Par acide minéral, on entend l'acide phosphorique ou l'acide nitrique.

On entend par acide alcane-sulfonique préférentiellement les acides alcane-sulfoniques de formule R-SO₃H, où R représente une chaîne hydrocarbonée saturée, linéaire ou ramifiée, comportant de 1 à 4 atomes de carbone.

Les acides alcane-sulfoniques incluent l'acide méthane-sulfonique, l'acide éthane-sulfonique, l'acide n-propane-sulfonique, l'acide *i*so-propane-sulfonique, l'acide n-butane-sulfonique, l'acide *i*so-butane-sulfonique, l'acide sec-butane-sulfonique, l'acide *tert*-butane-sulfonique, et les mélanges de deux ou plusieurs d'entre eux en toutes proportions.

Selon L'invention l'acide utilisé est l'acide méthane-sulfonique.

Ainsi, la présente invention met en œuvre de préférence au moins de l'acide méthane-sulfonique (AMS), tel que commercialisé par la société Arkema sous la dénomination Scaleva®, ou encore par la société B.A.S.F. sous la dénomination Lutropur®.

Par « tartre oxalaté » au sens de la présente invention, on entend tout type de résidu solide ou pâteux, minéral ou organique comprenant au moins un sel organique ou minéral de l'acide oxalique, et en particulier au moins un sel de métal alcalino-terreux de l'acide oxalique, plus particulièrement au moins un oxalate de calcium.

Dans la présente invention, les expressions « détartrage des oxalates », « nettoyage de tartre oxalaté », et « dissolution des salissures oxalatées » signifient le nettoyage, le décapage de tous types de surfaces souillées, enduites, recouvertes, en totalité ou en partie par des résidus, écailles, dépôts, secs ou encore humides, comprenant au moins un sel de l'acide oxalique défini précédemment, par élimination, dissolution, desdits résidus, écailles ou dépôts.

Ces expressions englobent également l'élimination partielle ou totale des résidus solides ou pâteux comprenant au moins un sel d'acide oxalique, comme défini plus haut, qui sont responsables des salissures, dépôts, colmatages non prévus ou non souhaitables, et qui sont habituellement retirés/éliminés par des moyens chimiques et/ou physiques.

Il a été découvert de manière tout à fait surprenante que l'association d'au moins un acide alcane-sulfonique avec au moins un acide minéral selon la revendication 1 conduit à une composition acide détartrante beaucoup plus efficace que la composition acide ne contenant pas d'acide alcane-sulfonique.

Selon un premier mode de réalisation préférée, la présente invention concerne une solution de détartrage des oxalates comprenant de l'acide phosphorique (H₃PO₄) et l'acide méthanesulfonique (AMS).

Il a été observé qu'une quantité équivalente de cette association H₃PO₄/AMS par rapport à la même quantité d'H₃PO₄, permet la dissolution d'une plus grande quantité de tartre oxalaté, notamment d'oxalate de calcium.

En outre lorsque l'association comprend entre 40% et 85% d'AMS et entre 60% et 15% d'H₃PO₄, par exemple environ 75% d'AMS et environ 25% d'H₃PO₄, ou encore environ 50% d'AMS et environ 50% d'H₃PO₄, une synergie a été observée, c'est-à-dire que ladite association H₃PO₄/AMS permet une dissolution plus efficace que celle à laquelle on s'attend théoriquement par calcul, pour dissoudre de l'oxalate de calcium.

Les pourcentages (%) indiqués dans la description de la présente invention sont exprimés en poids, sauf mention expresse contraire. L'acide méthanesulfonique utilisé dans la présente invention est de l'acide méthane-sulfonique à 70% dans l'eau. L'acide phosphorique est de l'acide phosphorique à 85% dans l'eau et l'acide nitrique est de l'acide nitrique à 68% dans l'eau.

Selon un deuxième mode de réalisation préféré, la présente invention concerne une solution de détartrage des oxalates comprenant de l'acide nitrique (HNO₃) et l'acide méthane sulfonique.

Il a par ailleurs été observé que lorsque l'association comprend entre 5% et 30% d'AMS et entre 95% et 70% d'HNO₃, de préférence environ 10% d'AMS et environ 90% d'HNO₃, une synergie a été observée, c'est-à-dire que ladite association HNO₃/AMS permet une dissolution plus efficace que l'HNO₃ utilisé seul, mais aussi plus efficace que l'AMS utilisé seul, pour dissoudre de l'oxalate de calcium.

Les compositions selon l'invention sont ainsi tout particulièrement bien adaptées pour le nettoyage et la dissolution des tartres oxalatés. Grâce à leur caractère acide, ces associations conviennent en outre pour l'élimination de tous autres types de salissure également présentes avec les oxalates, qu'il s'agisse de salissures organiques ou minérales, telle que le carbonate de calcium.

Les compositions de détartrage des oxalates selon l'invention peuvent être utilisées pures ou diluées dans tout milieu aqueux, organique, ou hydro-organique. On préfère cependant les formulations aqueuses, c'est-à-dire diluées à l'eau par exemple à des concentrations totales d'acides comprises entre 0,2% et 50% par rapport au poids total de la formulation, de préférence entre 0,5% et 20%, de préférence encore entre environ 0,5% et 10% par rapport au poids total de la formulation.

La concentration en acides dans la formulation dépend de nombreux facteurs, parmi lesquels on peut citer la quantité et la nature des oxalates à nettoyer, la nature et la forme de la surface à nettoyer, la température à laquelle est appliquée la formulation, et autres. L'homme du métier saura adapter la concentration en acides dans la formulation sans efforts excessifs.

Les compositions acides selon l'invention peuvent être formulées sous forme de mélanges concentrés, concentrés pouvant être dilués par l'utilisateur final. En variante, les formulations peuvent également être des formulations prêtes à l'emploi, c'est-à-dire qu'elles ne nécessitent pas d'être diluées. Enfin, au sens de la présente invention, les compositions acides peuvent être constituées exclusivement d'au moins un acide alcane-sulfonique et d'au moins un acide minéral, éventuellement et de préférence en solution dans l'eau, à diverses concentrations.

En outre, les compositions de détartrage acides selon l'invention peuvent être formulées par addition éventuelle d'un ou plusieurs additifs, tels que par exemple ceux choisis parmi :
- solvants, agents hydrotropes ou solubilisants (par exemple alcools, esters, cétones, amides, et autres),
- biocides, désinfectants (acide bromo-acétique, acide peracétique, acide salicylique, eau oxygénée, et autres),
- agents rhéologiques ou de texture ou épaississants ou gélifiants (sucres, polysaccharides, alginates, silice, silice amorphe, gommes et autres),
- retardateurs de flamme,
- conservateurs,
- tensio-actifs anioniques, cationiques, non-ioniques ou amphotères (tels que alcools et/ou amines éthoxylés, alkyl- et/ou aryl-sulfonates) émulsifiants, détergents, savons, et autres ;
- acides organiques ou minéraux (par exemple sulfurique, phosphorique, nitrique, sulfamique, acétique, citrique, formique, lactique, glycolique, oxalique et autres),
- agents moussants, antimoussants,
- anti-gels (par exemple éthylèneglycol, propylèneglycol, et autres) ;
- colorants,
- parfums, agents odorants,
- additifs anti-corrosion,
- et autres additifs connus de l'homme du métier.

Selon une variante, les compositions acides de la présente invention sont formulées sous forme de gel. Il a en effet été observé que les formulations sous forme de gels peuvent s'avérer très efficaces pour l'élimination des salissures à base de tartre oxalaté, non seulement en raison du gel lui-même qui permet une action plus longue du principe actif acide (le gel « adhère » plus longuement sur les surfaces, par rapport à une formulation aqueuse), mais aussi en raison du pouvoir nettoyant amélioré, par rapport à d'autres formulations-gels.

Les agents gélifiants et les tensio-actifs utilisables dans les formulations sous forme de gel peuvent être de tout type connu de l'homme du métier qui saura, sans difficulté particulière et en s'inspirant des exemples qui suivent, choisir et adapter la nature des agents gélifiants et des tensio-actifs appropriés.

Selon un autre aspect, la présente invention concerne une formulation sous forme de gel moussant. Les gels moussants sont en effet tout particulièrement intéressants car ils produisent une mousse collante, autrement dit une mousse adhérente aux surfaces souillées, tout en requérant une consommation moindre de matière active acide nettoyante, et présentent l'avantage d'une meilleure rinçabilité, c'est-à-dire une élimination plus simple et plus efficace, tout en nécessitant une moins grande quantité d'eau.

Selon le domaine et le mode d'application, les gels moussants peuvent être formulés sous forme de concentré, et avec une faible viscosité appropriée, puis dilués avant emploi jusqu'à obtenir l'efficacité attendue, quant à la viscosité et au pouvoir moussant.

Dans les formulations de gel moussant décrites ci-dessus, l'agent moussant peut être choisi parmi les agents moussants couramment utilisés par l'homme du métier, et de préférence parmi les oxydes d'amines, comme par exemple :
- les oxydes de diméthylalkylamine, la chaîne alkyle étant une chaîne « grasse », contenant par exemple de 10 à 30 atomes de carbone, de préférence de 12 à 22 atomes de carbone ;
- les oxydes d'amines éthoxylées ; et
- les mélanges de deux ou plusieurs d'entre elles.

L'utilisation d'au moins un oxyde d'amine éthoxylée, tel que, à titre non limitatif le Cecajel® OX100 de la société CECA, ou l'Aromox® T12 de la société Akzo seul ou association avec au moins un oxyde de diméthylalkylamine permet par exemple d'apporter de la stabilité au gel moussant.

Les agents moussants, et en particulier ceux décrits ci-dessus, forment généralement des gels lorsqu'ils sont mélangés à l'eau, c'est-à-dire qu'ils augmentent la viscosité de la formulation, sans qu'il soit nécessaire d'ajouter un agent gélifiant. Toutefois l'ajout d'un tel agent gélifiant n'est pas exclu de la présente invention.

Parmi les agents solubilisants ou hydrotropes utilisables dans le cadre de la présente invention, on peut citer, à titre d'exemple et de manière non limitative les xylène- ou cumène-sulfonates de sodium. De tels agents ne sont toutefois pas indispensables dans les compositions acides selon l'invention.

Les compositions acides selon la présente invention, qu'elles soient sous forme liquides, de gels ou de gels moussants, concentrées ou diluées, peuvent être appliquées selon toute méthode connue de l'homme du métier, et en particulier sous pression, ou encore à l'aide d'un pistolet pulvérisateur.

Selon un autre aspect, la présente invention concerne l'utilisation d'une composition d'acides telle que définie précédemment pour le détartrage, le nettoyage ou la dissolution de tout type de tartre comprenant au moins un sel minéral ou organique de l'acide oxalique, et en particulier au moins un sel de métal alcalino-terreux, plus particulièrement au moins un oxalate de calcium.

Selon encore un autre aspect, la présente invention concerne un procédé de détartrage, de nettoyage ou de dissolution de tout type de tartre comprenant au moins un sel minéral ou organique de l'acide oxalique défini ci-dessus présent par exemple sous forme de résidus, écailles, dépôts, secs ou encore humides, comprenant au moins une étape de mise en contact d'une quantité efficace d'au moins une composition d'acides selon l'invention, sous forme de formulation aqueuse, organique ou hydro-organique, sous forme de solution, de gel ou de gel moussant, telles qu'elles viennent d'être décrites, avec ledit sel minéral ou organique d'acide oxalique à éliminer, par contact, immersion, aspersion, pulvérisation, application d'une couche plus ou moins épaisse, éventuellement à l'aide d'outils appropriés connus de l'homme du métier (pinceaux, brosses, spatules, et autres), ladite étape de mise en contact étant éventuellement suivie d'une ou plusieurs étapes de rinçage et/ou de séchage.

La durée de mise en contact peut varier dans de grandes proportions, en fonction de la concentration et de la quantité d'acides utilisés, de la nature du tartre oxalaté à dissoudre, de la nature de la surface à nettoyer, et autres. Cette étape de mise en contact peut être suivie d'un temps de réaction nécessaire à la dissolution du tartre oxalaté que l'on souhaite éliminer, ce temps de réaction pouvant varier de quelques secondes à quelques heures, voire quelques jours, selon la température à laquelle est effectué le nettoyage, la pression d'application des acides, la quantité de tartre à éliminer, son degré d'incrustation, ainsi que la nature des surfaces à traiter.

Toutefois, il a été observé que les associations d'acides précités et qui forment un des objets de la présente invention permettent de réduire notablement la durée d'action par rapport à un procédé similaire mettant en œuvre un seul acide, sans acide alcane-sulfonique.

La température à laquelle est effectué le procédé décrit ci-dessus peut varier dans de grandes proportions et est généralement comprise entre -20°C et 150°C, de préférence entre 0°C et 80°C, de préférence encore entre 10°C et 80°C. Selon un mode de réalisation préféré, la température d'utilisation est la température ambiante ou encore une température comprise entre la température ambiante et environ 80°C.

Il peut ainsi être envisagé de mettre en température la composition d'acides et la surface à traiter, cette température pouvant être identique ou différente, ou encore de mettre en température soit la composition d'acides, soit la surface à traiter.

Enfin, après l'étape de traitement(s), et de rinçage(s) éventuel(s), la surface nettoyée peut être, le cas échant et si nécessaire, séchée, selon toute méthode connue de l'homme du métier, par exemple à l'air, sous courant d'air plus ou moins chaud, en étuve, par chauffage (électrique, lampes chauffantes), essuyage (papiers ou textiles absorbants), et autres.

Cette opération d'élimination de tartre oxalaté peut être réitérée une ou plusieurs fois selon la quantité de tartre à éliminer, et son degré d'incrustation sur les surfaces à traiter.

Le traitement par la composition d'acides tel qu'il vient d'être défini peut éventuellement être accompagné et/ou suivi d'une ou plusieurs opérations mécaniques (agitation, raclage, brossage, et autres), afin d'améliorer l'action chimique acide, si nécessaire.

Enfin, le traitement peut être éventuellement suivi d'une ou plusieurs opérations de rinçage, par exemple à l'eau claire, solvant(s) ou mélange(s) eau/solvant(s).

Il est en outre à noter que les compositions selon l'invention, et notamment les compositions synergiques comprenant de l'acide nitrique étant plus efficaces que l'acide nitrique utilisé seul, permettent de réduire les quantités efficaces d'acide nitrique et par conséquent l'apparition des phénomènes de corrosion, notamment lors du nettoyage de surfaces métalliques corrosion qui est fréquemment observée sur lesdites surfaces métalliques lors de l'utilisation d'acide nitrique seul.

Ainsi, les compositions d'acides selon la présente invention trouvent des utilisations tout à fait intéressantes dans tous les domaines d'utilisation, industriels, domestiques ou de collectivités, confrontés aux problèmes d'apparition de tartre oxalaté, résultant de la formation de sels insolubles de l'acide oxalique et notamment les sels alcalino-terreux et en particulier l'oxalate de calcium.

Les compositions d'acides selon la présente invention peuvent par conséquent avantageusement remplacer les acides minéraux couramment utilisés pour le détartrage de tartre oxalaté qui peut par exemple être trouvé dans les industries laitières et fromagères, dans les industries où sont préparées les boissons fermentées notamment les industries brassicoles, dans les domaines du stockage, du transport, et de la transformation des primeurs, légumes (épinards par exemple), fruits (fève de cacao, thé, betterave à sucre et autres), viandes, poissons, et autres, mais aussi pour le nettoyage des sanitaires (éviers, lavabos, baignoires, douches, toilettes) et également dans l'industrie papetière, et en règle générale, tout type d'industrie confrontée au problème de l'accumulation de tartre oxalaté.

En raison de leur grande efficacité, les compositions d'acides de la présente invention s'avèrent également efficaces pour nettoyer tout type de salissures, telles que rouille, tartre carbonaté, mais aussi tous types de salissures organiques (déjections et fientes animales), et autres.

La présente invention est maintenant illustrée au moyen des exemples qui suivent, sans présenter aucun caractère limitatif, et qui ne peuvent être par conséquent compris comme susceptibles de restreindre la portée de l'invention telle que revendiquée.

### EXEMPLE 1 (comparatif) :

### Essai de dissolution de carbonate de calcium avec AMS / H₃PO₄

Les tests de dissolution sont réalisés sur 3 g de carbonate de calcium (cube de marbre) plongés dans 50 g d'une composition d'acides selon l'invention à 1% dans l'eau.

Les acides utilisés sont l'acide méthanesulfonique (AMS) à 70% dans l'eau de Sobegi, commercialisé sous le nom de Scaleva®, et l'acide phosphorique à 85% dans l'eau, Normapur de VWR. On prépare 3 mélanges de ratios différents: H₃PO₄/AMS respectivement 1/3, 1/1, et 3/1 en poids. Ces mélanges sont ensuite dilués à 1% d'acides totaux dans l'eau.

Dans un flacon à col de 250 mL sont introduits 50 g d'une solution d'acides à 1% dans l'eau de matière active (acides), puis 3 g d'un cube de marbre (carbonate de calcium). Le flacon est fermé au moyen d'un bouchon.

Le flacon est placé dans un bain thermostaté à 70°C et mis sous agitation latérale (vitesse 100 sur appareil Politest® 20 de Bioblock Scientific) pendant 5 minutes ou 15 minutes.

Le cube de marbre est ensuite retiré du flacon, séché avec du papier absorbant, puis immergé dans 3 bains successifs de chacun 50 mL d'eau ultrapure. Le cube est à nouveau séché sur papier absorbant, est placé à l'étuve à 40°C pendant 20 minutes. Le cube est ensuite pesé à température ambiante afin de déterminer la masse de carbonate de calcium dissous.

Les résultats sont présentés dans le tableau 1 suivant :

**-- Tableau 1 --**

| ***Formulation d'acides*** | ***Concentration d'acides dans l'eau (%)*** | ***masse de Ca²⁺ dissous à 5 minutes (mg*/*L)*** | ***masse de Ca²⁺ dissous à 15 minutes (mg*/*L)*** |
|---|---|---|---|
| H₃PO₄ | 1,01 | 706 | 1457 |
| AMS | 1,00 | 1172 | 1961 |
| H₃PO₄ / AMS 1/1 en poids | 1,01 | 936 | 1666 |
| H₃PO₄ / AMS 1/3 en poids | 1, 02 | 1082 | 1834 |
| H₃PO₄ / AMS 3/1 en poids | 1,02 | 744 | 1513 |

On constate que l'AMS est toujours plus actif que l'acide phosphorique pour la dissolution du carbonate de calcium. L'AMS est environ 1,3 fois plus actif que l'acide phosphorique, après 15 minutes et environ 1,7 fois plus actif que l'acide phosphorique après 5 minutes.

En outre, l'activité des acides n'est pas proportionnelle au temps, l'efficacité n'est pas trois fois supérieure après 15 minutes qu'après 5 minutes.

On conclut donc que l'utilisation d'un mélange d'AMS et d'acide phosphorique ne conduit pas à une amélioration notable de la dissolution de carbonate de calcium.

### EXEMPLE 2 (selon l'invention) :

### Dissolution d'oxalate de calcium avec un mélange AMS / H₃PO₄

Les tests de dissolution de l'exemple 1 sont réalisés à nouveau en remplaçant les 3 g de carbonate de calcium par 3 g d'oxalate de calcium plongés dans 50 g d'une composition d'acides selon l'invention à 1% dans l'eau.

La solubilisation est mesurée par Plasma à Couplage Inductif (« Inductively Coupled Plasma » ou ICP en langue anglais) et les résultats sont donnés par la concentration en ions Ca²⁺ en mg/L.

Dans un flacon à col de 250 mL sont introduits 50 g d'une solution d'acides à 1% dans l'eau de matière active (acides), puis 3 g d'oxalate de calcium. Le flacon est fermé au moyen d'un bouchon.

Le flacon est placé dans un bain thermostaté à 70°C et mis sous agitation latérale (vitesse 100 sur appareil Politest® 20 de Bioblock Scientific) pendant 5 minutes ou 15 minutes.

La solution est ensuite filtrée sur un Acridisc® 0,22 µm, puis l'échantillon est analysé par ICP.

Les résultats sont présentés dans le tableau 2 suivant :

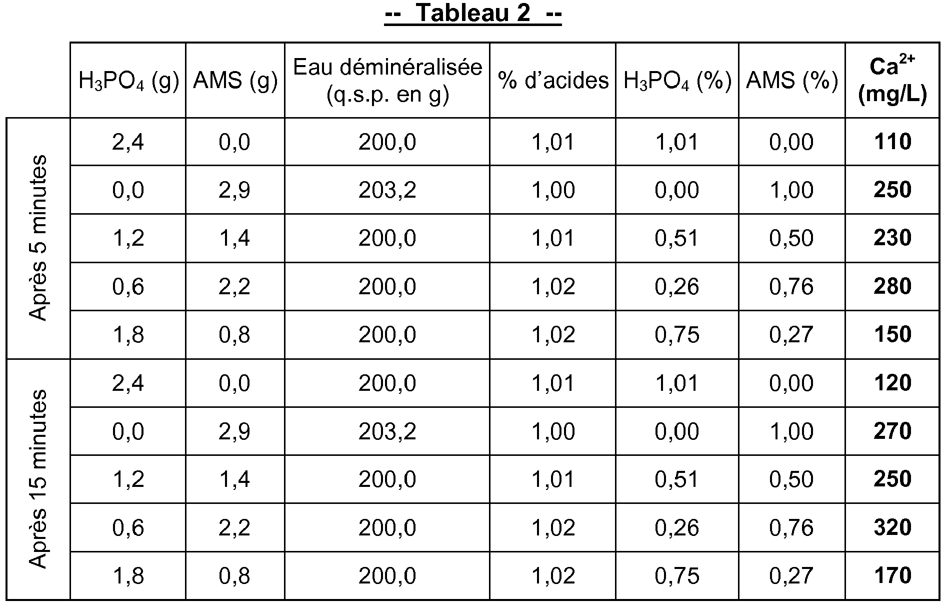

Ces résultats montrent tout d'abord que la dissolution de l'oxalate de calcium est en général environ 5 fois moindre que la dissolution du carbonate de calcium, mais que l'AMS est environ 2,3 fois plus actif que l'acide phosphorique.

L'activité de chaque acide n'est pas proportionnelle au temps : elle n'est pas trois fois plus importante après 15 minutes qu'après 5 minutes.

Dans tous les cas, l'ajout d'AMS dans l'acide phosphorique permet d'améliorer considérablement l'efficacité de l'acide phosphorique. En outre, les mélanges d'acides sont plus actifs que l'AMS seul, notamment avec les mélanges H₃PO₄/AMS 1/3, on obtient une solubilisation après 5 minutes de 280 mg/L, alors que la théorie montre que l'on devrait obtenir une solubilisation de 215 mg/L (110 x 0,25 + 250 x 0,75 = 215 mg/L). Une synergie est également observée avec le mélange H₃PO₄/AMS 1/1 (230 mg/L au lieu de 180 mg/L) et pour le mélange H₃PO₄/AMS 3/1 (150 mg/L au lieu de 90 mg/L).

### EXEMPLE 3 (selon l'invention) :

### Dissolution d'oxalate de calcium avec un mélange AMS / HNO₃

On reproduit les essais de l'exemple 2 en remplaçant l'acide phosphorique par l'acide nitrique, et on compare les efficacités des mélanges H₃PO₄/HNO₃ par rapport aux mélanges AMS/HNO₃. La concentration totale d'acides dans l'eau déminéralisée (% de matière active) est de 1,5% en poids (quantité d'eau ajoutée dans les solutions mères de mélanges d'acides : 20 g).

Les résultats sont présentés dans le tableau 3 suivant :

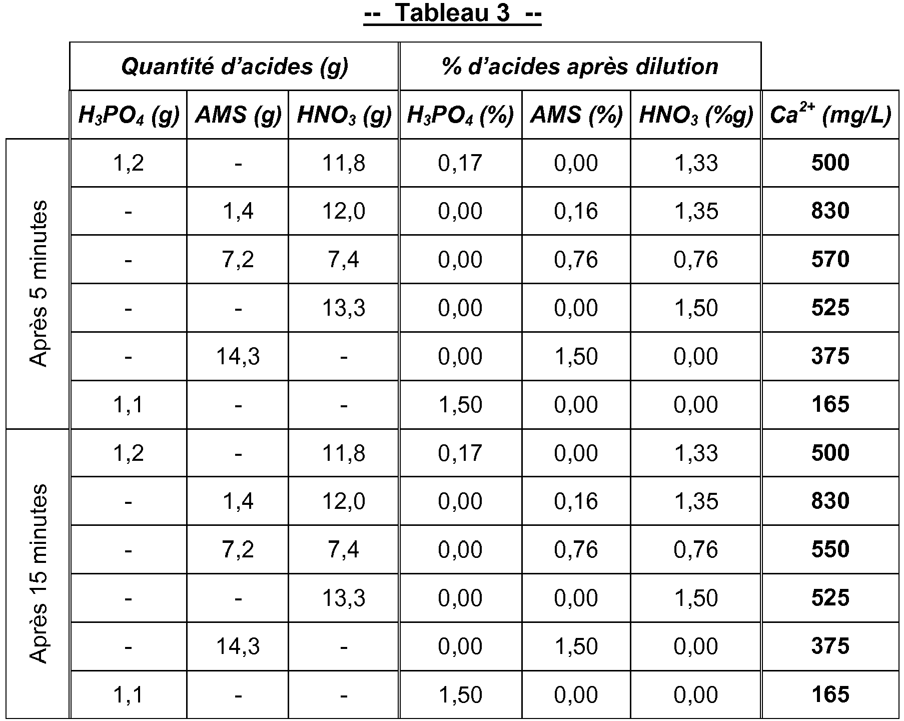

De manière surprenante, la quantité d'oxalate dissous après 15 minutes est similaire à la quantité d'oxalate dissous après seulement 5 minutes.

En outre, les mélanges d'acides comprenant l'AMS sont toujours beaucoup plus actifs que les mélanges H₃PO₄/HNO₃, et en particulier les mélanges comprenant environ 1,35% d'HNO₃:830 mg/L avec AMS/HNO₃, et 500 mg/L avec H₃PO₄/HNO₃.

Ces résultats montrent que, contrairement aux mélanges HNO₃/H₃PO₄, les mélanges HNO₃/AMS présentent une synergie : l'essai avec le mélange AMS 0,16% et HNO₃ 1,35% permet de solubiliser 830 mg/L d'oxalate, contre seulement 525 mg/L avec de l'acide nitrique seul à 1,5%.

On remarque ainsi qu'il est possible d'utiliser une moins grande quantité d'acide nitrique, lorsqu'il est associé à de l'AMS pour solubiliser une plus grande quantité d'oxalate de calcium.

## Revendications

1. Procédé de détartrage, de nettoyage ou de dissolution de tout type de tartre comprenant au moins un sel minéral ou organique de l'acide oxalique, et en particulier au moins un sel de métal alcalino-terreux de l'acide oxalique, plus particulièrement au moins un oxalate de calcium, sous forme de résidus, écailles, dépôts, secs ou encore humides, ledit procédé comprenant au moins une étape de mise en contact d'une quantité efficace d'au moins une composition d'acides, sous forme de formulation aqueuse, organique ou hydro-organique, sous forme de solution, de gel ou de gel moussant, avec ledit sel minéral ou organique d'acide oxalique à éliminer, par contact, immersion, aspersion, pulvérisation, application d'une couche plus ou moins épaisse, ladite étape de mise en contact étant éventuellement suivie d'une ou plusieurs étapes de rinçage et/ou de séchage, ladite composition d'acides comprenant :
- entre 40% et 85% en poids d'acide méthane-sulfonique et entre 60% et 15% en poids d'acide phosphorique, par exemple environ 75% en poids d'acide méthane-sulfonique et environ 25% en poids d'acide phosphorique, ou encore environ 50% en poids d'acide méthane-sulfonique et environ 50% en poids d'acide phosphorique, ou bien
- entre 5% et 30% en poids d'acide méthane-sulfonique et entre 95% et 70% en poids d'acide nitrique, de préférence environ 10% en poids d'acide méthane-sulfonique et environ 90% en poids d'acide nitrique.

2. Procédé selon la revendication 1, dans lequel la composition d'acides est pure ou diluée, dans tout milieu aqueux, organique, ou hydro-organique, de préférence diluée à l'eau à des concentrations totales d'acides comprises entre 0,2% et 50% en poids par rapport au poids total de la formulation, de préférence entre 0,5% et 20%, de préférence encore entre environ 0,5% et 10% en poids par rapport au poids total de la formulation.

3. Procédé selon la revendication 1 ou la revendication 2, dans lequel la composition d'acides comprend en outre un ou plusieurs additifs choisis parmi :
- solvants, agents hydrotropes ou solubilisants (par exemple alcools, esters, cétones, amides, et autres),
- biocides, désinfectants (acide bromo-acétique, acide peracétique, acide salicylique, eau oxygénée, et autres),
- agents rhéologiques ou de texture ou épaississants ou gélifiants (sucres, polysaccharides, alginates, silice, silice amorphe, gommes et autres),
- retardateurs de flamme,
- conservateurs,
- tensio-actifs anioniques, cationiques, non-ioniques ou amphotères (tels que alcools et/ou amines éthoxylés, alkyl- et/ou aryl-sulfonates) émulsifiants, détergents, savons, et autres ;
- acides organiques ou minéraux (par exemple sulfurique, phosphorique, nitrique, sulfamique, acétique, citrique, formique, lactique, glycolique, oxalique et autres),
- agents moussants, antimoussants,
- anti-gels (par exemple éthylèneglycol, propylèneglycol, et autres) ;
- colorants,
- parfums, agents odorants, et
- additifs anti-corrosion.

4. Utilisation d'une composition d'acides comprenant :
- entre 40% et 85% en poids d'acide méthane-sulfonique et entre 60% et 15% en poids d'acide phosphorique, par exemple environ 75% en poids d'acide méthane-sulfonique et environ 25% en poids d'acide phosphorique, ou encore environ 50% en poids d'acide méthane-sulfonique et environ 50% en poids d'acide phosphorique, ou bien
- entre 5% et 30% en poids d'acide méthane-sulfonique et entre 95% et 70% en poids d'acide nitrique, de préférence environ 10% en poids d'acide méthane-sulfonique et environ 90% en poids d'acide nitrique, pour le détartrage, le nettoyage ou la dissolution de tout type de tartre comprenant au moins un sel minéral ou organique de l'acide oxalique, et en particulier au moins un sel de métal alcalino-terreux de l'acide oxalique, plus particulièrement au moins un oxalate de calcium.

5. Utilisation selon la revendication 4, pour l'élimination de tartre oxalaté dans les industries laitières et fromagères, dans les industries où sont préparées les boissons fermentées, notamment les industries brassicoles, dans les domaines du stockage, du transport, et de la transformation des primeurs, légumes (épinards par exemple), fruits (fève de cacao, thé, betterave à sucre et autres), viandes, poissons, et autres, mais aussi pour le nettoyage des sanitaires (éviers, lavabos, baignoires, douches, toilettes) et également dans l'industrie papetière, et en règle générale, tout type d'industrie confrontée au problème de l'accumulation de tartre oxalaté.

## Patentansprüche

1. Verfahren zur Kesselsteinentfernung, Abreinigung oder Auflösung jeglicher Art von Kesselstein, der mindestens ein anorganisches oder organisches Salz von Oxalsäure und insbesondere mindestens ein Erdalkalimetallsalz von Oxalsäure, spezieller mindestens ein Calciumoxalat, umfasst, in Form von trockenen oder auch feuchten Rückständen, Schuppen oder Ablagerungen, wobei das Verfahren mindestens einen Schritt des Inkontaktbringens einer wirksamen Menge mindestens einer Säurezusammensetzung in Form einer wässrigen, organischen oder wässrig-organischen Formulierung in Form einer Lösung, eines Gels oder eines schäumenden Gels mit dem zu entfernenden anorganischen oder organischen Salz von Oxalsäure durch Kontakt, Eintauchen, Aufsprühen, Zerstäuben oder Aufbringen einer mehr oder weniger dicken Schicht, wobei auf den Schritt des Inkontaktbringens gegebenenfalls ein oder mehrere Spül- und/oder Trocknungsschritte folgen, wobei die Säurezusammensetzung Folgendes umfasst:
- zwischen 40 und 85 Gew.-% Methansulfonsäure und zwischen 60 und 15 Gew.-% Phosphorsäure, beispielsweise ungefähr 75 Gew.-% Methansulfonsäure und ungefähr 25 Gew.-% Phosphorsäure oder auch ungefähr 50 Gew.-% Methansulfonsäure und ungefähr 50 Gew.-% Phosphorsäure, oder auch
- zwischen 5 und 30 Gew.-% Methansulfonsäure und zwischen 95 und 70 Gew.-% Salpetersäure, vorzugsweise ungefähr 10 Gew.-% Methansulfonsäure und ungefähr 90 Gew.-% Salpetersäure.

2. Verfahren nach Anspruch 1, wobei die Säurezusammensetzung rein oder in einem beliebigen wässrigen, organischen oder wässrig-organischen Medium verdünnt ist, vorzugsweise mit Wasser auf Säuregesamtkonzentrationen zwischen 0,2 und 50 Gew.-%, bezogen auf das Gesamtgewicht der Formulierung, vorzugsweise zwischen 0,5 und 20 Gew.-% und noch weiter bevorzugt zwischen ungefähr 0,5 und 10 Gew.-%, bezogen auf das Gesamtgewicht der Formulierung, verdünnt ist.

3. Verfahren nach Anspruch 1 oder Anspruch 2, wobei die Säurezusammensetzung außerdem ein oder mehrere Additive umfasst, die aus
- Lösungsmitteln, Hydrotropika oder Lösungsvermittlern (beispielsweise Alkoholen, Estern, Ketonen, Amiden usw.),
- Bioziden, Desinfektionsmitteln (Bromessigsäure, Peressigsäure, Salicylsäure, wässrige Wasserstoffperoxidlösung usw.),
- Rheologie- oder Textur- oder Verdickungs- oder Gelierungsmitteln (Zuckern, Polysacchariden, Alginaten, Siliciumdioxid, amorphem Siliciumdioxid, Gummen usw.),
- Flammschutzmitteln,
- Konservierungsstoffen,
- anionischen, kationischen, nichtionischen oder amphoteren Tensiden (wie ethoxylierten Alkoholen und/oder Aminen, Alkyl- und/oder Arylsulfonaten), Emulgatoren, Detergentien, Seifen usw.,
- organischen oder anorganischen Säuren (beispielsweise Schwefelsäure, Phosphorsäure, Salpetersäure, Sulfamidsäure, Essigsäure, Citronensäure, Ameisensäure, Milchsäure, Glykolsäure, Oxalsäure usw.),
- Schaum- und Antischaummitteln,
- Frostschutzmitteln (beispielsweise Ethylenglykol, Propylenglykol usw.),
- Farbmitteln,
- Duftstoffen, Odorierungsmitteln und
- Korrosionsschutzadditiven ausgewählt sind.

4. Verwendung einer Säurezusammensetzung, umfassend:
- zwischen 40 und 85 Gew.-% Methansulfonsäure und zwischen 60 und 15 Gew.-% Phosphorsäure, beispielsweise ungefähr 75 Gew.-% Methansulfonsäure und ungefähr 25 Gew.-% Phosphorsäure oder auch ungefähr 50 Gew.-% Methansulfonsäure und ungefähr 50 Gew.-% Phosphorsäure, oder auch
- zwischen 5 und 30 Gew.-% Methansulfonsäure und zwischen 95 und 70 Gew.-% Salpetersäure, vorzugsweise ungefähr 10 Gew.-% Methansulfonsäure und ungefähr 90 Gew.-% Salpetersäure zur Kesselsteinentfernung, Abreinigung oder Auflösung jeglicher Art von Kesselstein, der mindestens ein anorganisches oder organisches Salz von Oxalsäure und insbesondere mindestens ein Erdalkalimetallsalz von Oxalsäure, spezieller mindestens ein Calciumoxalat, umfasst.

5. Verwendung nach Anspruch 4 zur Entfernung von Oxalat-Kesselstein in der Milch- und Käseindustrie, in Industrien, in denen fermentierte Getränke hergestellt werden, insbesondere Brauereiindustrien, auf den Gebieten der Lagerung, des Transports und der Verarbeitung von Frühgemüse, Gemüse (beispielsweise Spinat), Früchten (Kakaobohne, Tee, Zuckerrübe usw.), Fleisch, Fisch usw., aber auch zur Reinigung von Sanitäranlagen (Spülbecken, Waschbecken, Badewannen, Duschen, Toiletten) sowie in der Papierindustrie und allgemein jeglicher Art von Industrie, bei der das Problem der Ansammlung von Oxalat-Kesselstein auftritt.

## Claims

1. Method for descaling, cleaning or dissolving any type of scale comprising at least one inorganic or organic salt of oxalic acid and in particular at least one alkaline earth metal salt of oxalic acid, more particularly at least one calcium oxalate, in the form of dry or also wet residues, flakes or deposits, the said method comprising at least one stage of bringing an effective amount of at least one acid composition, in the form of an aqueous, organic or aqueous/organic formulation, in the form of a solution, gel or foaming gel, into contact with the said inorganic or organic salt of oxalic acid to be removed by contact, immersion, sprinkling, spraying or application of a more or less thick layer, the said contacting stage optionally being followed by one or more rinsing and/or drying stages, the said acid composition comprising:
- between 40% and 85% by weight of methanesulfonic acid and between 60% and 15% by weight of phosphoric acid, for example approximately 75% by weight of methanesulfonic acid and approximately 25% by weight of phosphoric acid, or also approximately 50% by weight of methanesulfonic acid and approximately 50% by weight of phosphoric acid, or else,
- between 5% and 30% by weight of methanesulfonic acid and between 95% and 70% by weight of nitric acid, preferably approximately 10% by weight of methanesulfonic acid and approximately 90% by weight of nitric acid.

2. Method according to Claim 1, in which the acid composition is pure or diluted, in any aqueous, organic or aqueous/organic medium, preferably diluted with water at total acid concentrations of between 0.2% and 50% by weight, with respect to the total weight of the formulation, preferably between 0.5% and 20%, more preferably between approximately 0.5% and 10%, by weight, with respect to the total weight of the formulation.

3. Method according to Claim 1 or Claim 2, in which the acid composition additionally comprises one or more additives chosen from:
- solvents, hydrotropic or solubilizing agents (for example alcohols, esters, ketones, amides and others),
- biocides, disinfectants (bromoacetic acid, peracetic acid, salicylic acid, aqueous hydrogen peroxide solution and others),
- rheological or texturing or thickening or gelling agents (sugars, polysaccharides, alginates, silica, amorphous silica, gums and others),
- flame retardants,
- preservatives,
- anionic, cationic, nonionic or amphoteric surfactants (such as ethoxylated alcohols and/or amines, alkyl- and/or arylsulfonates), emulsifiers, detergents, soaps and others;
- organic or inorganic acids (for example sulfuric, phosphoric, nitric, sulfamic, acetic, citric, formic, lactic, glycolic, oxalic and other acids),
- foaming, antifoaming agents,
- antifreezes (for example ethylene glycol, propylene glycol and others),
- colourants,
- fragrances, odorous agents, and
- anticorrosion additives.

4. Use of an acid composition comprising:
- between 40% and 85% by weight of methanesulfonic acid and between 60% and 15% by weight of phosphoric acid, for example approximately 75% by weight of methanesulfonic acid and approximately 25% by weight of phosphoric acid, or also approximately 50% by weight of methanesulfonic acid and approximately 50% by weight of phosphoric acid, or else,
- between 5% and 30% by weight of methanesulfonic acid and between 95% and 70% by weight of nitric acid, preferably approximately 10% by weight of methanesulfonic acid and approximately 90% by weight of nitric acid, for the descaling, cleaning or dissolution of any type of scale comprising at least one inorganic or organic salt of oxalic acid and in particular at least one alkaline earth metal salt of oxalic acid, more particularly at least one calcium oxalate.

5. Use according to Claim 4, for removing oxalate scale in the dairy and cheese industries, in industries where fermented beverages are prepared, in particular brewing industries, in the fields of the storage, transportation and processing of early horticultural produce, vegetables (spinach for example), fruit (cocoa bean, tea, sugar beet and others), meat, fish and others, but also for the cleaning of bathroom installations (sinks, washbasins, baths, showers, toilets) and also in the paper industry and, as a general rule, any type of industry faced with the problem of the accumulation of oxalate scale.
